# EUROPEAN PATENT SPECIFICATION

(11) **EP 3 498 664 B1**
(45) Date of publication and mention of the grant of the patent: **19.08.2020**
(21) Application number: 18206439.4
(22) Date of filing: 15.11.2018
(51) Int. Cl.: C01B 3/00

(54) **HYDROGEN-STORAGE DEVICE FOR HYDROGEN-STORAGE**
WASSERSTOFFSPEICHERVORRICHTUNG ZUR WASSERSTOFFSPEICHERUNG
DISPOSITIF DE STOCKAGE D'HYDROGÈNE POUR STOCKAGE D'HYDROGÈNE

(30) Priority: 15.12.2017 DE 102017130240
(43) Date of publication of application: 19.06.2019
(73) Proprietor: Airbus Defence and Space GmbH, 82024 Taufkirchen (DE); Airbus Operations GmbH, 21129 Hamburg (DE)
(72) Inventor: Godula-Jopek, Agata, 82024 Taufkirchen (DE); Gregory, Duncan H., Cardross, Argyll & Bute, G82 5EZ (GB); Champet, Simon, 69270 Cailloux sur Fontaines (FR); Westenberger, Andreas, 21129 Hamburg (DE); Warmuzinski, Krzysztof, 41-803 Zabrze (PL)
(74) Representative: LKGLOBAL Lorenz & Kopf PartG mbB Patentanwälte

(56) References cited:
- WO-A2-2009/109962
- DE-A1-102014 006 377
- US-A1- 2005 180 916
- ZIWEI TANG ET AL: "Graphene Oxide Based Recyclable Dehydrogenation of Ammonia Borane within a Hybrid Nanostructure", JOURNAL OF THE AMERICAN CHEMICAL SOCIETY, vol. 134, no. 12, 28 March 2012 (2012-03-28), pages 5464-5467, XP055381717, ISSN: 0002-7863, DOI: 10.1021/ja300003t
- ZENG MIN ET AL: "Preparing three-dimensional graphene architectures: Review of recent developments", CHINESE PHYSICS B, CHINESE PHYSICS B, BRISTOL GB, vol. 22, no. 9, 25 September 2013 (2013-09-25), page 98105, XP020250421, ISSN: 1674-1056, DOI: 10.1088/1674-1056/22/9/098105 [retrieved on 2013-09-25]

## Description

### FIELD OF THE INVENTION

The present invention relates to a hydrogen-storage device for hydrogen-storage and a method for releasing hydrogen from said hydrogen-storage device. Moreover, the invention relates to an energy-producing device comprising said hydrogen-storage device, and an aircraft comprising said hydrogen-storage device or said energy-producing device.

### BACKGROUND OF THE INVENTION

Many local components used in mobile applications such as cars or aircrafts require electrical power. A lot of these components, and in particular safety equipment, are separate from the electrical components that are actually required to run the mobile application (for instance the navigation system, fuel gauges, flight controls, and hydraulic systems of an aircraft). For instance, in an aircraft such local components are various types of cabin equipment such as area heaters, cabin ventilation, independent ventilation, area or spot lights such as cabin lights and/or reading lights for passenger seats, high comfort seats, water supply, charging stations for passenger electronics and electrical sockets, galley and galley devices, emergency lighting, emergency torches, electrical equipment of life rafts, ram air turbines (RAT) and also auxiliary power units (APU) for mission aircrafts.

Fuel cells have attracted attention as clean energy sources. The technology of fuel cell systems combines a source of hydrogen (i.e. a fuel such as liquid hydrocarbons) with oxygen from the air to produce electrical energy as a main product by using a fuel cell catalyst. In addition to electrical power, a fuel cell system produces thermal power (i.e. heat), water or water vapor and oxygen-depleted air. These by-products are far less harmful than carbon dioxide emissions produced by electric power generating devices burning fossil fuels. Consequently, the use of fuel cells to produce electrical energy especially in aircraft is desirable.

There are several options for storing the hydrogen required for driving the fuel cells. One option is to store the hydrogen in a compressed or liquid state, for instance by using commonly known gas cylinders. However, this requires high pressures and in some applications also very low temperatures. Currently available storage tanks for liquid or compressed hydrogen are very heavy and/or bulky and due to requirements for high hydrogen pressure and, if required, sub-ambient temperatures, they are awkward to refill. For example, a 2-liter 700 bar cylinder available from Dynatech weighs around 4.8 kg and has a maximum gravimetric density of 1.7 wt.% H₂ and a 5-liter 300 bar cylinder available from Luxfer weighs around 3.8 kg and has a maximum gravimetric density of 2.6 wt.% H₂. Most applications currently use compressed hydrogen storage solutions. However, the storage of hydrogen at high pressures can lead to safety concerns in particular if used for mobile and portable applications.

Another option is storing the hydrogen in the solid state, see for example Tang et al., Journal of the American Society, vol. 134, no. 12, pp. 5464-5467, and US 2005/0180916. However, the storage of hydrogen in the solid state requires an elusive set of criteria to be met. Relevant criteria for assessing the suitability of potential hydrogen-storage materials are for instance the hydrogen capacity (weight %; kg hydrogen / kg system) of the material, the temperature range for the dehydrogenation temperature, the system volumetric density (g/L; kg hydrogen / L system), charging and discharging rates such as the system fill time (fueling rate, kg/min), the storage system costs ($/kg hydrogen) and the operational cycle life.

The landscape of hydrogen-storage materials in the solid state presently available is mainly composed of metal hydrides, chemical hydrides (also called "chemical hydrogen") and adsorbents which are porous solids. Metal hydrides provide pure hydrogen but, however, release it only at high temperature and are predominantly air sensitive. The disadvantages of adsorbents are the low operating temperatures which are not suitable for mobile applications and most experimental studies also show that this class of hydrogen-storage materials have low volumetric and gravimetric hydrogen densities, in particular in case they have a dehydrogenation temperature of -180°C or higher. Chemical hydride materials have intermediate dehydrogenation temperature with suitable hydrogen capacity but can release toxic gases which may poison fuel cell catalysts as by-products. In other words, so far there are no materials available which meet all criteria and each of the best-performing known hydrogen-storage materials have respective advantages and disadvantages.

Moreover, commercially available solid state storage tanks are relatively heavy and the gravimetric hydrogen densities of tanks are typically ≤ 2 wt.%. For instance, the H₂-Tank2GO from Zoz GmbH has a total weight of around 3 kg and provides a gravimetric hydrogen density of around 1.2 wt.%.

For mobile applications, such as aircrafts, in particular the hydrogen capacity and the temperature range for dehydrogenation temperature are of high relevance. As presently available solid state hydrogen-storage devices do not satisfactory meet these requirements and, further, due to the relatively high weight of such available storage devices, hydrogen-storage in the solid state has not yet been taken into account for such mobile applications. Hence, there is a need for new hydrogen-storage devices allowing to overcome the mentioned disadvantages. Moreover, there is a need for a method for efficiently and reliably releasing hydrogen from such new hydrogen-storage devices.

### SUMMARY OF THE INVENTION

The object of the present invention is solved by the subject-matter of the independent claims, wherein further embodiments are incorporated in the dependent claims. The invention is further described in the description and the figures.

According to an aspect of the present invention, a hydrogen-storage device is provided. The hydrogen-storage device comprises an inner core material, an outer coating and a hydrogen releasing interface in the outer coating. The inner core material comprises a composite containing a matrix material comprising porous carbon-containing material and a hydrogen-storage material comprising chemically bonded hydrogen, wherein the porous carbon-containing material has a density of 1-100 mg/cm³.

According to a further aspect of the present invention, a method for releasing hydrogen from a hydrogen-storage-device according to the present invention is provided. The method comprises the steps of connecting the hydrogen-storage device to an energy power source; applying energy to the hydrogen-storage-device by means of the energy power source; and releasing hydrogen from the hydrogen-storage device via the hydrogen releasing interface.

According to a further aspect of the present invention, an energy-producing device comprising the hydrogen-storage device of the present invention is provided.

According to a further aspect of the present invention, an aircraft comprising the hydrogen-storage device of the present invention or the energy-producing device comprising the hydrogen-storage device of the present invention is provided.

### BRIEF DESCRIPTION OF THE DRAWINGS

Figure 1 A and Figure 1 B show a schematic view of two different embodiments of a hydrogen-storage device of the present invention;
Figure 2 shows a schematic view of an energy producing device of the present invention;
Figure 3 shows a schematic view of a method for releasing hydrogen from a hydrogen-storage device of the present invention; and
Figure 4 shows a schematic view of an aircraft comprising the energy producing device of the present invention.

### DETAILLED DESCRIPTION OF THE INVENTION

The present invention provides a hydrogen-storage device comprising an inner core material, an outer coating and a hydrogen releasing interface in the outer coating, wherein the inner core material comprises a composite containing a matrix material comprising porous carbon-containing material and a hydrogen-storage material comprising chemically bonded hydrogen. Hence, the hydrogen-storage device of the invention is a solid state hydrogen-storage device, i.e. a storage device in which hydrogen is stored in the solid state rather than for example in a gaseous or liquid state.

The hydrogen-storage device of the invention comprises an inner core material. The inner core material comprises a composite containing a matrix material comprising porous carbon-containing material and a hydrogen-storage material comprising chemically bonded hydrogen.

According to an example, the matrix material comprising porous carbon-containing material comprises porous amorphous carbon material or porous graphene-derived material and preferably comprises porous graphene-derived material, such as for instance porous graphene, porous graphene oxide, porous reduced graphene oxide or porous other functionalized graphene-derived material. More preferably, the matrix material comprising porous carbon-containing material comprises porous graphene oxide and, even more preferably, the matrix material comprising porous carbon-containing material consists of porous graphene oxide.

Carbon-containing material, such as graphene derived materials, including graphene, graphene oxide and reduced graphene oxide, may provide extremely low-density matrix material, i.e. support material, for the hydrogen-storage device of the invention. Hence, by using carbon-containing material as the matrix material, it is possible to reduce the total weight of the matrix material and, hence, of the total hydrogen-storage device of the invention. Moreover, in case graphene derived materials are used, it is possible to form complex hierarchical structures from these two-dimensional sheet-like materials that extend to three dimensions, for instance by stacking the two-dimensional sheet-like materials one on each other. Such three-dimensional hierarchical structures may confine the hydrogen-storage material comprising chemical bonded hydrogen thereby enhancing the properties of the hydrogen-storage material as regards selective hydrogen release, release of high purity hydrogen as well as hydrogen release at lower temperatures.

The matrix material comprising porous carbon-containing material used in the hydrogen-storage device of the present invention has a density of 1-100 mg/cm³, preferably of 5-50 mg/cm³ and more preferably of 8-20 mg/cm³, such as for instance from 8-15 mg/cm³ or 8-12 mg/cm³. Measurement methods to determine the density are not limited and generally known to the skilled person. For instance, the density of the porous carbon-containing material may be measured using helium pycnometry. In this method a sample density is determined by measurement of buoyancy using an inert gas which is typically helium. The procedure is similar to static gas sorption except that pressure regulation is not required. For instance, pycnometry measurements can be performed using an Intelligent Gravimetric Analyser (IGA) from Hiden Isochema (Warrington, United Kingdom). For instance, the IGA manual (for instance Issue E from 2007; document number HA-085-060), and in particular Section 4.3 (Sample Density Determination) and Appendix B (Buoyancy Correction) of the thereof, provide a detailed density measurement protocol.

The porous carbon-containing material may further comprise walls which are an assembly of sheets of the respective carbon-containing material, such as for instance the respective graphene-derived material.

A sheet of the carbon-containing material is a monoatomic layer of the carbon-containing material, i.e. a single atomic sheet of the carbon-containing material, such as for instance graphene-derived material. In case the carbon-containing material is for instance graphene, the sheet contains sp²-bonded carbon atoms in a basically honeycomb-like structure. In case the carbon-containing material is for instance graphene oxide or reduced graphene oxide, the sheet contains sp²-bonded carbon atoms as well as sp³-bonded carbon atoms in a basically honeycomb-like structure, wherein the sp³-bonded carbon atoms are bonded to an oxygen atom which may be located below or above the horizontal plane of the layer formed by the sp²-bonded carbon atoms. In other words, the sp²-bonded carbon atoms are densely packed in a honeycomb crystal lattice and this lattice is slightly broken up at the positions of the sp³-bonded carbon atoms which are additionally bonded to an oxygen atom. Hence, the monoatomic layer of the carbon-containing material is one carbon atom in thickness. In case the carbon-containing material is for instance graphene oxide or reduced graphene oxide, oxygen atoms are further located below and/or above the horizontal plane of the layer formed by the sp²-bonded carbon atoms.

An assembly of several, i.e. more than one, and up to hundred or even thousand, monoatomic sheets of the carbon-containing material, such as for instance graphene, graphene oxide and reduced graphene oxide material, which are closely stacked together may form a wall, i.e. a layer. In other words, in a wall of the carbon-containing material, multiple sheets of the carbon-containing material are densely packed. Such wall of several sheets of the carbon-containing material has a higher stability and rigidity than a single sheet of the carbon-containing material. The wall thickness is for instance tuneable via the temperature gradient used in a method to prepare the porous carbon-containing material as will be described below. By definition, any of graphene, graphene oxide and reduced graphene oxide material is a two-dimensional material and even an assembly of several monoatomic sheets thereof staked one on each other as described above can be considered as a two-dimensional material. The walls hold together due to hydrogen bonds. At the macroscale, the material may resemble a porous but rigid sponge-like material while at the micro/nano level the structure is made up of a hierarchy of clusters of two-dimensional material extending in all three dimensions.

In case the porous carbon-containing material comprises graphene oxide or reduced graphene oxide, the ratio of carbon atoms to oxygen atoms (C/O atomic ratio) in the graphene oxide sheet as well as in the wall of graphene oxide sheets may range from 300/1 to 1/1, such as from 200/1 to 1/1, from 100/1 to 1/1, from 50/1 to 1/1 or from 20/1 to 1/1 and is preferably between 10/1 and 1/1 and more preferably between 5/1 to 1/1 such as 2.5/1 to 1.2/1. If the atomic ratio is from 5/1 to 1/1 or even from 2.5/1 to 1.2/1, due to a high amount of oxygen atoms, the porous graphene oxide material may trap a higher amount of hydrogen-storage material as will be described below. In other words, such porous graphene oxide material or reduced graphene oxide material may store a higher amount of hydrogen-storage material and, hence, may release a higher amount of hydrogen.

The carbon-containing material is porous. Porous materials are typically characterized by their surface area (m²/g), pore volume (cc/g) and pore size distribution (Å) usually determined by using nitrogen adsorption at 77 K. The Brunauer-Emmett-Teller (BET) method is the most widely used procedure for the determination of the surface area of solid materials and is generally known to the skilled person. For instance, porosity may be determined using a Quadrasob Evo device from Quantachrome Instruments (Florida, USA). The Quadrasob Evo User Manual version 6.0 provides a detailed protocol as well as theory for the porosity measurement. More details on the characterization of porous material are for instance provided in the IUPAC (International Union of Pure and Applied Chemistry) technical report of 1994 (Pure & Appl. Chem., vol. 66, no. 8, pp. 1739-1758), in the publication "Characterization of porous solids and powders: surface area, pore size, and density" by S. Lowell, Joan E. Shields, Martin A. Thomas and Matthias Thommes, Springer, 2006 and/or in the BET method original publication (J. Am. Chem. Soc., 1938, vol. 60, no. 2, pp 309-319). As used herein, porosity also describes the macroscopic structure of the porous carbon-containing material, namely the position of more than one, i.e. multiple, sheets of the carbon-containing material and/or walls of sheets of the carbon-containing material relative to each other. The voids of the porous material are the spaces between the more than one, for instance multiple, sheets of the carbon-containing material and/or walls of sheets of the carbon-containing material.

According to an example, the matrix material comprising porous carbon-containing material preferably has laminar porosity. The term "laminar porosity" as used herein describes a structure wherein more than one, i.e. multiple sheets of carbon-containing material and/or walls of sheets of carbon-containing material are stacked basically parallel to each other so that the average distance between two adjacent sheets of carbon-containing material and/or walls of sheets of carbon-containing material is basically constant. In other words, the macroscopic appearance of the porous carbon-containing material having laminar porosity is a layered structure wherein the sheets of the carbon-containing material and/or walls of sheets of the carbon-containing material are parallel stacked one over each other, thus forming a monolith form. In even other words, no particular centre of the structure may be observed.

One advantage of the above described matrix material comprising carbon-containing material is that it may define the shape and volume of the entire structure of the hydrogen-storage device and also may provide intrinsic strength to the hydrogen-storage device. Moreover, a further advantage of the above described matrix material comprising carbon-containing material is that it may act as a molecular sieve removing deleterious gaseous by-products from the hydrogen obtained from the hydrogen-storage material confined in the matrix. For instance, if the hydrogen storage material contains nitrogen and/or boron, the matrix material comprising carbon-containing material may remove undesired by-products such as ammonia and diborane.

The inner core material further comprises a hydrogen storage material comprising chemically bonded hydrogen.

The term "hydrogen storage material comprising chemically bonded hydrogen" as used herein refers to any compound wherein hydrogen is directly bonded to an element which is more electropositive than hydrogen, i.e. an element having a lower electronegativity value than hydrogen, any inorganic compound or salt containing hydrogen which is bonded to an element different from carbon, such as for instance nitrogen or oxygen, and any alloy of a transition metal or lanthanoid wherein hydrogen occupies interstitial positions. Preferably, the hydrogen storage material comprising chemically bonded hydrogen is any compound wherein hydrogen is directly bonded to an element which is more electropositive than hydrogen.

The term "hydrogen storage material comprising chemically bonded hydrogen" may refer to any inorganic compound or salt containing hydrogen which is bonded to an element different from carbon, such as for instance nitrogen or oxygen. Preferably, the hydrogen is bonded exclusively to an element different from carbon, such as for instance nitrogen or oxygen. Examples are ammoniates, hydrazinates and compounds containing amine groups, amide groups, imide groups and hydroxy groups. Particularly preferred examples are LiNH₂, Li₂NH, Mg(NH₃)₆Cl₂, Mg(NH₃)₆(BH₄)₂ and NaOH.

The term "hydrogen storage material comprising chemically bonded hydrogen" may refer to any alloy of a transition metal or lanthanoid wherein hydrogen occupies interstitial positions, such as LaNi₅ or Mg₂Ni.

The term "hydrogen storage material comprising chemically bonded hydrogen" may refer to and preferably refers to compounds wherein hydrogen is directly bonded to an element which is more electropositive than hydrogen. In other words, in such compounds, hydrogen has the formal oxidation state of -I. The hydrogen storage material comprising chemically bonded hydrogen according to the present invention may for instance be a metal hydride or a hydride of a metalloid. Examples of suitable metal hydrides include lithium hydride (LiH), sodium hydride (NaH), magnesium hydride (MgH₂), calcium hydride (CaH2), aluminum hydride or alane (AlH₃), as well as ternary and higher compounds formed from said metals hydrides, optionally in combination with a transition metal or lanthanoid. Examples of hydrides of a metalloid include hydrides of boron, such as ammonia borane, amidoboranes and metal borohydrides such as sodium borohydride, lithium borohydride or magnesium borohydride such as magnesium borohydride ammoniate, and hydrides of aluminum, such as alanate containing species such as AlH₄⁻ and AlH₆³⁻. Preferably, the hydrogen storage material comprising chemically bonded hydrogen according to the present invention comprises ammonia borane and/or metal borohydride, more preferably comprises ammonia borane or magnesium borohydride ammoniate, and even more preferably comprises ammonia borane.

The hydrogen storage material comprising chemically bonded hydrogen provides the hydrogen released from the hydrogen-storage device according to the present invention.

The inner core material of the hydrogen-storage device of to the present invention may be prepared using a method, i.e. an ice-templating method, comprising the steps of
(i) dispersion of a suspension comprising the carbon-containing material and the hydrogen-storage material comprising chemically bonded hydrogen,
(ii) ice templating of the dispersed suspension comprising the carbon-containing material and the hydrogen-storage material comprising chemically bonded hydrogen so as to obtain a frozen monolith of the suspension comprising the carbon-containing material and the hydrogen-storage material comprising chemically bonded hydrogen, and
(iii) freeze drying the obtained frozen monolith of the suspension comprising the carbon-containing material and hydrogen-storage material comprising chemically bonded hydrogen.

In step (i), a suspension comprising the carbon-containing material and the hydrogen-storage material in a solvent is dispersed, for instance by sonication dispersion. In other words, in the ice-templating method to produce the inner core material, the carbon-containing material and the hydrogen-storage material are mixed first. The mixing may be performed in the solid state, followed by adding a solvent or adding one component in the solvent first and subsequently adding the other component. For instance, the hydrogen-storage material may be added to a dispersion of the carbon-containing material. The ratio of the carbon-containing material to the hydrogen-storage material is not particularly limited and may range from 100:1 to 1:10 by weight, preferably from 20:1 to 1:5 by weight, more preferably from 10:1 to 1:2 by weight, even more preferably from 5:1 to 1:2 by weight, and most preferably from 2:1 to 1:2. The dispersion may have a concentration of the hydrogen-storage material of between 1 and 100 mg/mL, preferably between 5 and 50 mg/mL, more preferably between 10 and 30 mg/mL and most preferably between 14 and 20 mg/mL.

If the suspension is dispersed by sonication dispersion, sonication may be performed using any commercial available sonication equipment, such as for instance an Elma S30 Elmasonic bath from Elma Schmidbauer GmbH (Stuttgart, Germany). The duration of sonication is not limited. However, for ensuring best dispersion results, sonication is performed for at least 30 seconds, preferably for at least 1 minute, more preferably for at least 2 minutes and most preferably for at least 5 minutes. In view of procedural efficiency, sonication is usually performed for not longer than 30 minutes and preferably for not longer than 10 minutes.

The solvent as such is not limited and may be any organic or inorganic solvent such as ethanol, acetonitrile, tetrahydrofuran and water (among others) or may also be a mixture of solvents such as a mixture of two or more of the aforementioned solvents. It has to be taken into account that the solvent is compatible with the hydrogen storage material to be dispersed, i.e. that for instance the solvent does not react with the hydrogen storage material. For some hydrogen storage materials, such as ammonia borane, water is preferred as a solvent. For some hydrogen storage materials, such as metal borohydrides, acetonitrile is preferred as a solvent.

In step (ii), ice templating of the suspension comprising the carbon-containing material and the hydrogen-storage material comprising chemically bonded hydrogen is performed so as to obtain a frozen monolith of the suspension comprising carbon-containing material and the hydrogen-storage material comprising chemically bonded hydrogen.

For ice templating, the suspension comprising the carbon-containing material and the hydrogen-storage material comprising chemically bonded hydrogen is cooled by a cooling agent. The cooling agent as such is not limited any may be for instance any cooling agent which is able to freeze the suspension depending on the solvent or mixture of solvents used. Thus, the cooling agent may be for instance a gas, such as a liquid gas, such as liquid nitrogen, liquid hydrogen, liquid argon or liquid helium, or dry ice (carbon dioxide), methanol and/or ammonia and preferably is liquid nitrogen.

The suspension obtained in step (i) may be poured into a mould on a metallic plate. The form of the mould is not particularly limited and the mould may hence have any desired shape, such as for instance any three-dimensional structure having a polygon, ellipse, or circle as a basis. In other words, the mould can have any desired three-dimensional shape depending on the desired three-dimensional shape of the hydrogen-storage device of the present invention. The mould may be made of any suitable material. However, a preferred mould is a Teflon mould. The metallic plate serves as a high thermal conductivity medium and may be made from any suitable metal or metal alloy, preferably from copper, aluminum, steel, such as for example stainless steel, iron and nickel, mixtures thereof and/or alloys thereof. The mould may be attached to the metallic plate using vacuum grease.

The liquid suspension is poured into the mould. The metallic plate is suspended on the surface of the cooling agent, for instance the liquid gas, preferably the liquid nitrogen, and the suspension cooled. Consequently, the temperature gradient is vertical, leading to a laminar porosity. Additionally, it is also possible to tune the thickness of the walls of the sheets of the carbon-containing material via control of the temperature gradient. Without being bond to theory, the following mechanism is suggested. A fast cooling rate will generate a high number of nucleation points and therefore numerous crystals of frozen solvent, such as for instance ice crystals if water is used as the solvent. This creates less space between the crystals with the effect of making the wall of the material thinner. By contrast, a reduced, i.e. slower, cooling rate facilitates the growth of fewer crystals of frozen solvent (via fewer nucleation points), such as for instance ice crystals if water is used as the solvent, and therefore generates thicker walls in the material.

In step (iii) freeze drying of the obtained frozen monolith of the suspension comprising the carbon-containing material and the hydrogen-storage material comprising chemically bonded hydrogen is performed to evaporate the solvent. Freeze drying is commonly known by the skilled person and is performed by evacuating a vessel containing the frozen substance to be dried. For instance, depending on the particular solvent used, freeze drying may be performed under reduced pressure such as a pressure of 10.000 Pa or below, preferably 1000 Pa or below and most preferably 100 Pa or below. The duration of freeze drying may vary from several minutes to several hours or even days. Usually, freeze drying is performed for at least one hour, preferably for at least 2 hours and most preferably for at least 5 hours. However, for efficiency reasons, freeze drying is usually performed no longer than 48 hours and preferably no longer than 24 hours. Typically, freeze drying is performed for around 16 to 24 hours. As will be appreciated, the particular choice of pressure and duration also depends on the size of the monolith to be freeze dried as well as on the solvent to be evaporated and can be readily estimated by the skilled person.

An advantage of the above described ice-templating method is that the composite containing the matrix material and the hydrogen-storage material is templated in situ which avoids the cumbersome and challenging processes of impregnation or infiltration which are currently used in all known confinement methods.

The hydrogen-storage device of the present invention further comprises an outer coating. The outer coating provides a volumetrically-efficient confinement of the inner core material. Type and material of the outer coating as such are not particularly limited and suitable materials are in general known by the skilled person. However, the outer coating preferably comprises at least one material selected from graphene, graphene derived composite, fiber material such as carbon fiber or glass fiber, for instance woven in a fabric, indium tin oxide (ITO) and polyvinyl chloride, and more preferably comprises graphene.

Preferably, the outer coating as such has low weight, thus providing a light skin and, hence, optimizing the gravimetric density of the whole hydrogen-storage device of the invention. More preferably, the outer coating as such is transparent. Transparent materials allow for instance for the design of windows in the outer coating of the hydrogen-storage device of the present invention enabling direct visual inspection of the inner core material of the hydrogen-storage device to detect for instance any mechanical failure. Even more preferably, the outer coating as such is conductive. Conductive materials allow for instance for a better hydrogen gas monitoring in the hydrogen-storage device and/or heating by means of electricity. In particular graphene meets all of these properties. As appreciated by the skilled person, graphene is transparent up to few layers of thickness. If polyvinyl chloride is used, an even further advantage is that it is resistant to hydrogen, ammonia and carbon monoxide. As appreciated by the skilled person, polyvinyl chloride can also be transparent.

The application of the outer coating to the core material is not limited to a certain method. Common methods to apply an outer coating to a substrate are commonly known by the skilled person and include application by physical vapor deposition, chemical vapor deposition and/or spraying techniques, i.e. the outer coating may be sprayed onto the inner core material. Alternatively, the inner core material may also be wrapped within the outer coating.

The outer coating may further comprise additional additives. Such additives are commonly known by the skilled person and may improve characteristics like strength, electron conductivity, cut/rip resistance, water repellency, self-cleaning ability, self-healing ability, fire-resistance, pressure difference resistance and/or chemical resistance. Preferably, the outer coating further comprises a conductive additive. The additional additives can for instance be metallic and/or ceramic and/or polymeric and include carbon nanotubes, metal particles or wires such as wires made from aluminium, copper or iron. A preferred additional additive are carbon nanotubes for their light weight. Preferred conductive additives are for example graphene, metallic nanoparticles, conducting polymers or indium tin oxide (ITO).

The outer coating may be configured as a heat source and control to heat the inner core material. The heating may be performed by electricity using the Joule effect. In other words, the heating may be performed by a flow of a current through a conductive outer coating or multiplicity of electrically conductive elements arranged on or within the outer coating. This may require the presence of an interface on the outer coating for connecting the outer coating to an electricity source, especially a current source. Hence, in one embodiment, the outer coating comprises an interface for connecting the outer coating to an electricity source. The outer coating therefore may comprise a net made of conductive paths arranged on or within the outer coating. The net may comprise heating elements or wires which emit thermal energy resulting from being flown through by electric current. In another exemplary embodiment, the conducting path forms a single conductive element, which is guided through the outer coating. The wire may be laid at or within the outer coating like a matrix or multiplicity of parallel sections so that the surface of the outer coating is heated substantially uniform to a desired temperature. A temperature sensor may be arranged on the outer coating to monitor the temperature of the outer coating. The temperature may be transmitted to a control unit which is configured to control the current flown through the electrically conductive elements in order to increase or reduce the temperature. For example, the thermal control system may comprise elements, such as for example a circuitry, adapted to cool down the outer coating by Peltier effect.

In a further embodiment, a film of a transparent conducting material such as indium tin oxide may be additionally deposited on the outer coating or may be part of the outer coating.

The hydrogen-storage device of the invention further comprises a hydrogen releasing interface in the outer coating. According to an example, the hydrogen releasing interface is a valve. The valve may offer an adjustable hydrogen outlet and/or an interface for connecting the hydrogen-storage device to a further component, such as a pipe or tube. The valve crosses through the outer coating of the hydrogen-storage device so as to allow a flow of hydrogen between the inner volume of the hydrogen-storage device, i.e. the inner core material, and the outside of it.

According to an example, at least one heat source is arranged within the inner core material. The heat source may be configured to provide an optimized heat distribution for a maximum and/or defined hydrogen release.

According to an example, the hydrogen-storage device is rechargeable with hydrogen and or recyclable. Both the matrix material and the hydrogen-storage material can be potentially re-cycled and reused. For instance, the used composite of the inner core material can be re-dispersed in a solvent that solubilizes the decomposition products of the hydrogen-storage material and filtrated so as to separate the porous carbon-containing material from the dispersion. After drying, the carbon-containing material can be reused with fresh hydrogen storage material. Also the solubilized decomposition products can be regenerated after drying, for instance by applying heat and hydrogen pressure for obtaining metal hydrides.

The hydrogen-storage device of the invention has a desirable high hydrogen storage rate and in particular has a high gravimetric hydrogen density as in particular the overall specific weight is low compared to standard batteries. Additionally, the hydrogen-storage device of the invention resides under atmospheric pressure at room temperature when not in use. In other words, under such "at-rest" condition the hydrogen-storage device stays safe even if it is physically compromised, for instance due to fractures or breaks, since at ambient pressure there is no leakage of hydrogen. Also, as the hydrogen-storage device of the invention resides under atmospheric pressure, less maintenance is required compared to high-pressure hydrogen-storage devices.

Moreover, unlike rigid hydrogen-storage devices, such as those for instance fabricated from steel or carbon fiber composites, which are typically required to withstand high pressure, the hydrogen-storage-device according to the invention has a tuneable structure. The shape can be adjusted to fit the application space, i.e. volume, while retaining the desired storage properties.

The hydrogen-storage device of the present invention operates by controlling the release of hydrogen from the hydrogen storage material confined between the matrix material comprising porous carbon-containing material, such as for instance layers or sheets of the matrix material. As a result of the interaction of the matrix material and the hydrogen storage material, the dehydrogenation temperature of the hydrogen storage material can be reduced compared to the dehydrogenation temperature for the hydrogen storage material alone. Moreover, the amounts of the undesired by-products carbon monoxide, carbon dioxide and ammonia are very low and close to the detection limit. The content of all by-products is at least a factor 1000 lower in relation to the amount of released hydrogen. In other words, the hydrogen-storage device (10) of the present invention allows for a selective hydrogen release at reduced temperature.

Moreover, in some embodiments of the hydrogen-storage device of the invention, for instance if the hydrogen-storage material is ammonia borane, heat is needed only to trigger the reaction and release hydrogen from the composite in one shot. In other words, in such case heating is required only at the beginning as the hydrogen release will be spontaneous once initiated, i.e. the reaction is exothermic. In this scenario, all hydrogen will be released from the hydrogen-storage device which qualifies the hydrogen-storage device as an ideal hydrogen storage for fuel cells providing electricity for emergency systems, such as for instance emergency locator transmitters or emergency systems in life rafts.

The present invention further provides a method for releasing hydrogen from the hydrogen-storage device of the present invention. The method comprises the steps of connecting the hydrogen-storage device to a power source; applying energy to the hydrogen-storage device by means of the power source; and releasing hydrogen from the hydrogen-storage device via the hydrogen releasing interface.

The power source is preferably an electricity source and/or a microwave source. The energy applied to the to the hydrogen-storage device needs to be able to sufficiently heat the hydrogen storage material so that decomposition of the hydrogen storage material is achieved or at least triggered so as to release hydrogen. For instance, in some embodiments the applied energy needs to be able to heat the inner core material up to 150°C, such as up to 130°C or 120°C. However, in some embodiments it is also possible to heat the hydrogen storage device only up to 90°C or even 80°C in case such temperatures are already sufficient to trigger the decomposition of the hydrogen storage material. For instance, the decomposition reaction of ammonia borane and magnesium borohydride ammoniate may already be triggered at a temperature of around 80°C. Lower temperatures are desirable as they require less energy input.

The present invention further provides an energy-producing device comprising the hydrogen-storage device of the present invention and a fuel cell. The energy-producing device may be used to supply electrical power for instance in an aircraft to local components such as various types of cabin equipment such as area heaters, cabin ventilation, independent ventilation, area or spot lights such as cabin lights and/or reading lights for passenger seats, high comfort seats, water supply, charging stations for passenger electronics and electrical sockets, galley and galley devices, emergency lighting, emergency torches, electrical equipment of life rafts and also auxiliary power units (APU) for mission aircrafts.

The present invention further provides an aircraft comprising the hydrogen-releasing device of the present invention or the energy-producing device of the present invention.

### DETAILED DESCRIPTION OF EMBODIMENTS

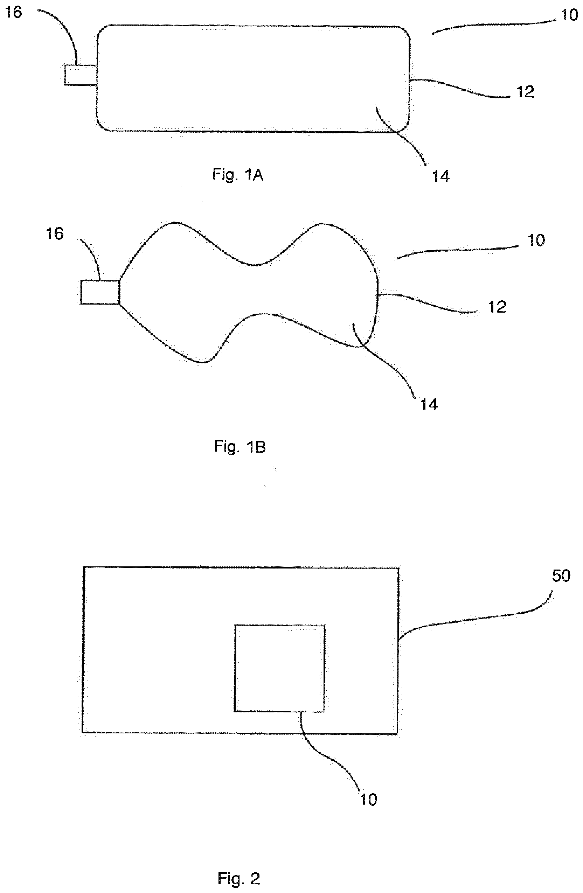

Fig. 1 A and Fig. 1 B show two different embodiments of a hydrogen-storage-device 10 according to the invention having a different shape. The hydrogen-storage device 10 comprises an outer coating 12, an inner core material 14 and a hydrogen releasing interface 16 in the outer coating 12. The inner core material 14 comprises a composite containing a matrix material and a hydrogen-storage material comprising chemically bonded hydrogen.

The inner core material 14 of the hydrogen-storage-device 10 is composed of a matrix comprising porous carbon-containing material, for instance porous graphene-derived material, such as graphene oxide, and a hydrogen-storage material comprising chemically bonded hydrogen, such as ammonia borane or lithium borohydride. In an embodiment, the porous carbon-containing material is graphene oxide and the hydrogen-storage material is ammonia borane. In another embodiment, the porous carbon-containing material is graphene oxide and the hydrogen-storage material is magnesium borohydride ammoniate. The composites have stable, relatively robust structures which can be further modified by incorporation of strengthening elements to reinforce the monolithic structure thereof. The hydrogen-storage device 10 materials withstand high temperatures and mechanical stress and, under suitable working conditions, is suitable for extended cycling. Due to the plasticity, such as malleability and ductility, of carbon-containing materials and in particular of graphene-based materials, the hydrogen-storage device 10 may be formed in different shapes according to the system requirements (and available free space), thus offering a compact storage solution. The composite material of the inner core material, for example graphene oxide with ammonia borane or magnesium borohydride ammoniate, may be encapsulated and/or lined and/or finished and/or incorporated with suitable high strength, chemically inert additives. These other components can be for instance metallic and/or ceramic and/or polymeric as needed for instance for strength, flexibility, electrical and/or thermal conductivity and chemical resilience.

In an example, not shown, the graphene is transparent. Therefore, it may be possible to visually monitor the hydrogen-storage-device 10. This property may be exploited to design "windows" in the outer coating 12 of hydrogen-storage device 10 or indeed to make the entire hydrogen-storage-device 10 transparent. Such an option enables direct visual inspection of the inner core material 14 of the hydrogen-storage-device 10 to detect for instance any mechanical failure. No current hydrogen-storage device materials (e.g. metals, carbon fibre) are transparent and "windows" are impossible to integrate safely in current high-pressure tank technologies.

The required running time is the criterion for the size of the hydrogen-storage device 10, i.e. the more hydrogen is required for a particular application, the larger the hydrogen-storage device.

Fig. 2 shows a schematic view of an energy-producing device 50. Since the hydrogen-storage device 10 has high hydrogen-storage rate, it may replace, in combination with a fuel cell, an electrical power converter or conventional batteries. The advantage of the energy-producing device 50 is the low specific weight compared to batteries, which is desirable for mobile applications. The specific reaction behavior of the hydrogen-storage material, i.e. a reaction once started will continue until the hydrogen-storage device 10 is totally discharged, is ideal for specific applications, such as emergency electrical emergency systems, such as for instance emergency locator transmitters, emergency systems in life rafts. Additionally, the energy-producing device 50 is also particularly suitable for other electrical powered systems, where a reliable electrical supply is required even after a long time of not being used.

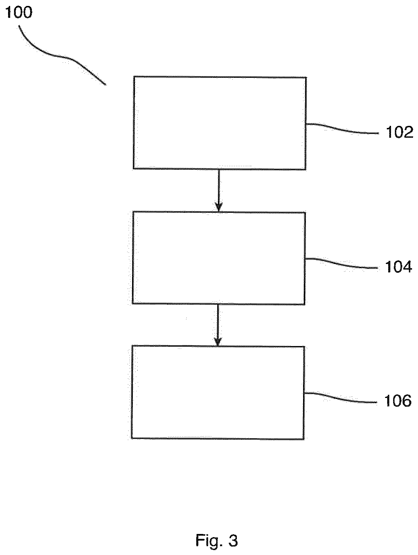

Fig. 3 shows a method 100 for releasing hydrogen from a hydrogen-storage-device 10. The method 100 firstly comprises connecting 102 the hydrogen-storage device to a power source. Secondly energy is applied 104 to the hydrogen-storage-device 10 by means of the power source. After that, hydrogen is released 106 from the hydrogen-storage device 10 via the hydrogen releasing interface 16 in the outer coating 12. The power source is preferably an electricity source and/or a microwave source. Applying energy from a power source leads to heating of the hydrogen storage device and in particular of the inner core material. This causes the hydrogen-storage material to decompose and, hence, results in the generation of hydrogen. For the hydrogen gas being available and released from the hydrogen releasing interface 16, the pressure of the generated hydrogen need to be above atmospheric pressure.

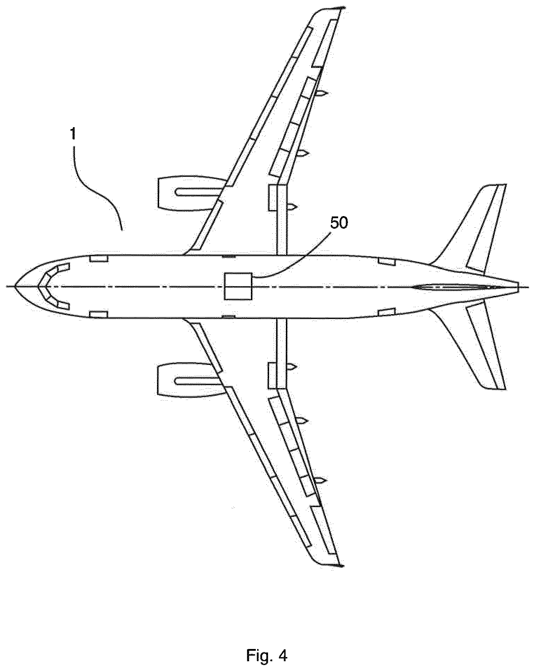

Fig. 4 shows a schematic view of an aircraft 1 comprising the energy-producing device 50. Due to the fact that the energy-producing device can be dimensioned and tailored to fit in any space with a high design freedom, the energy-producing device can be located in every possible place in the aircraft.

The work leading to this invention has received funding from the European Union's Seventh Framework Programme (FP7/2007-2013) under grant agreement n° 303447.

## Claims

1. A hydrogen- storage device (10), comprising:
- an inner core material (14);
- an outer coating (12); and
- a hydrogen releasing interface (16) in the outer coating (12);
wherein the inner core material comprises a composite containing a matrix material comprising porous carbon-containing material, and a hydrogen-storage material comprising chemically bonded hydrogen,
wherein the porous carbon-containing material has a density of 1-100 mg/cm³.

2. Hydrogen-storage device (10) according to claim 1,
wherein the hydrogen-storage material comprises ammonia borane and/or metal borohydride.

3. Hydrogen-storage device (10) according to any one of the preceding claims, wherein the hydrogen-storage material comprises ammonia borane or magnesium borohydride ammoniate.

4. Hydrogen-storage device (10) according to any one of the preceding claims,
wherein the outer coating comprises at least one of graphene, graphene derived composite, fiber material, indium tin oxide and polyvinyl chloride.

5. Hydrogen-storage device (10) according to any one of the preceding claims,
wherein the matrix material comprising porous carbon-containing material comprises porous graphene material and preferably porous graphene oxide.

6. Hydrogen-storage device (10) according to any one of the preceding claims,
wherein the porous carbon-containing material has a density of 5-50 mg/cm³ and preferably of 8-20 mg/cm³.

7. Hydrogen-storage device (10) according to any one of the preceding claims, wherein the porous carbon-containing material has laminar porosity.

8. Hydrogen-storage device (10) according to any of the preceding claims,
wherein the outer coating (12) further comprises a conductive additive.

9. Hydrogen-storage device (10) according to any one of the preceding claims,
wherein the outer coating (12) is configured as a heat source and control to heat the inner core material (14).

10. Hydrogen-storage device (10) according to any one of the preceding claims,
wherein a heat source is arranged within the inner core material (14).

11. Hydrogen-storage device (10) according to any one of the preceding claims,
wherein the hydrogen releasing interface (16) is a valve.

12. Hydrogen-storage device (10) according to any one of the preceding claims,
wherein the hydrogen-storage device (10) is rechargeable with hydrogen and/or recyclable.

13. A method (100) for releasing hydrogen from a hydrogen-storage device (10) according to any one of the preceding claims, comprising the following steps:
- connecting (102) the hydrogen-storage device (10) to a power source;
- applying (104) energy to the hydrogen-storage device (10) by means of the power source;
- releasing (106) hydrogen from the hydrogen-storage device (10) via the hydrogen releasing interface (16),
wherein the power source is preferably an electricity source and/or a microwave source.

14. An energy-producing (50) device comprising the hydrogen-storage device (10) according to any of claims 1 to 12 and a fuel cell.

15. Aircraft (1) comprising the hydrogen-storage device (10) according to of any one of claim 1 to 12 or the energy-producing (50) device of claim 14.

## Patentansprüche

1. Eine Wasserstoff-Speichervorrichtung (10), umfassend:
- ein inneres Kernmaterial (14);
- eine äußere Beschichtung (12); und
- eine Wasserstoff freisetzende Grenzfläche (16) in der äußeren Beschichtung (12);
wobei das innere Kernmaterial einen Verbundstoff umfasst, der ein Matrixmaterial, das poröses kohlenstoffhaltiges Material umfasst, und ein Wasserstoffspeichermaterial, das chemisch gebundenen Wasserstoff umfasst, enthält,
wobei das poröse kohlenstoffhaltige Material eine Dichte von 1-100 mg/cm³ aufweist.

2. Wasserstoff-Speichervorrichtung (10) nach Anspruch 1,
wobei das Wasserstoffspeichermaterial Ammoniakboran und/oder Metallborhydrid umfasst.

3. Wasserstoffspeichervorrichtung (10) nach einem der vorstehenden Ansprüche, wobei das Wasserstoffspeichermaterial Ammoniakboran oder Magnesiumborhydridammoniat umfasst.

4. Wasserstoff-Speichervorrichtung (10) nach einem der vorstehenden Ansprüche,
wobei die äußere Beschichtung mindestens eines von Graphen, von Graphen abgeleitetem Verbundmaterial, Fasermaterial, Indiumzinnoxid und Polyvinylchlorid umfasst.

5. Wasserstoff-Speichervorrichtung (10) nach einem der vorstehenden Ansprüche,
wobei das Matrixmaterial, das poröses kohlenstoffhaltiges Material umfasst, poröses Graphenmaterial und vorzugsweise poröses Graphenoxid umfasst.

6. Wasserstoff-Speichervorrichtung (10) nach einem der vorstehenden Ansprüche,
wobei das poröse kohlenstoffhaltige Material eine Dichte von 5-50 mg/cm³ und vorzugsweise von 8-20 mg/cm³ aufweist.

7. Wasserstoffspeichervorrichtung (10) nach einem der vorstehenden Ansprüche, wobei das poröse kohlenstoffhaltige Material eine laminare Porosität aufweist.

8. Wasserstoff-Speichervorrichtung (10) nach einem der vorstehenden Ansprüche,
wobei die äußere Beschichtung (12) ferner einen leitfähigen Zusatzstoff umfasst.

9. Wasserstoff-Speichervorrichtung (10) nach einem der vorstehenden Ansprüche, wobei die äußere Beschichtung (12) als eine Wärmequelle und Steuerung konfiguriert ist, um das innere Kernmaterial (14) zu erwärmen.

10. Wasserstoff-Speichervorrichtung (10) nach einem der vorstehenden Ansprüche,
wobei eine Wärmequelle innerhalb des inneren Kernmaterials (14) angeordnet ist.

11. Wasserstoff-Speichervorrichtung (10) nach einem der vorstehenden Ansprüche,
wobei die Wasserstoff freisetzende Schnittstelle (16) ein Ventil ist.

12. Wasserstoff-Speichervorrichtung (10) nach einem der vorstehenden Ansprüche,
wobei die Wasserstoff-Speichervorrichtung (10) mit Wasserstoff wiederaufladbar und/oder wiederverwertbar ist.

13. Verfahren (100) zur Freisetzung von Wasserstoff aus einer Wasserstoff-Speichervorrichtung (10) gemäß einem der vorstehenden Ansprüche, umfassend die folgenden Schritte:
- Verbinden (102) der Wasserstoff-Speichervorrichtung (10) mit einer Energiequelle;
- Anlegen (104) von Energie an die Wasserstoff-Speichervorrichtung (10) mittels der Energiequelle;
- Freisetzen (106) von Wasserstoff aus der Wasserstoff-Speichervorrichtung (10) über die Wasserstoff-Freisetzungsschnittstelle (16),
wobei die Energiequelle vorzugsweise eine Elektrizitätsquelle und/oder eine Mikrowellenquelle ist.

14. Energieerzeugende Vorrichtung (50), umfassend die Wasserstoffspeichervorrichtung (10) nach einem der Ansprüche 1 bis 12 und eine Brennstoffzelle.

15. Flugzeug (1), umfassend die Wasserstoffspeichervorrichtung (10) nach einem der Ansprüche 1 bis 12 oder die Energieerzeugungsvorrichtung (50) nach Anspruch 14.

## Revendications

1. Un dispositif de stockage d'hydrogène (10), comprenant :
- un matériau de noyau interne (14) ;
- un revêtement extérieur (12) ; et
- une interface libérant de l'hydrogène (16) dans le revêtement extérieur (12) ;
dans lequel le matériau du noyau interne comprend un composite contenant un matériau de matrice comprenant un matériau poreux contenant du carbone, et un matériau de stockage d'hydrogène comprenant de l'hydrogène chimiquement lié,
dans laquelle le matériau poreux contenant du carbone a une densité de 1-100 mg/cm³.

2. Dispositif de stockage d'hydrogène (10) selon la revendication 1,
dans laquelle le matériau de stockage de l'hydrogène comprend de l'ammoniac borane et/ou du borohydrure métallique.

3. Dispositif de stockage d'hydrogène (10) selon l'une quelconque des revendications précédentes, dans lequel le matériau de stockage d'hydrogène comprend du borane d'ammoniac ou du borohydrure de magnésium ammoniaqué.

4. Dispositif de stockage d'hydrogène (10) selon l'une quelconque des revendications précédentes,
dans lequel le revêtement extérieur comprend au moins un élément parmi le graphène, un composite dérivé du graphène, un matériau fibreux, l'oxyde d'indium et d'étain et le chlorure de polyvinyle.

5. Dispositif de stockage d'hydrogène (10) selon l'une quelconque des revendications précédentes,
dans lequel le matériau de la matrice comprenant un matériau poreux contenant du carbone comprend un matériau poreux de graphène et de préférence de l'oxyde de graphène poreux.

6. Dispositif de stockage d'hydrogène (10) selon l'une quelconque des revendications précédentes,
dans laquelle le matériau poreux contenant du carbone a une densité de 5 à 50 mg/cm³ et de préférence de 8 à 20 mg/cm³.

7. Dispositif de stockage d'hydrogène (10) selon l'une quelconque des revendications précédentes, dans lequel le matériau poreux contenant du carbone a une porosité laminaire.

8. Dispositif de stockage d'hydrogène (10) selon l'une quelconque des revendications précédentes,
dans lequel le revêtement extérieur (12) comprend en outre un additif conducteur.

9. Dispositif de stockage d'hydrogène (10) selon l'une quelconque des revendications précédentes,
dans laquelle le revêtement extérieur (12) est configuré comme une source de chaleur et un contrôle pour chauffer le matériau du noyau intérieur (14).

10. Dispositif de stockage d'hydrogène (10) selon l'une quelconque des revendications précédentes,
dans lequel une source de chaleur est disposée à l'intérieur du matériau du noyau interne (14).

11. Dispositif de stockage d'hydrogène (10) selon l'une quelconque des revendications précédentes,
où l'interface de libération d'hydrogène (16) est une vanne.

12. Dispositif de stockage d'hydrogène (10) selon l'une quelconque des revendications précédentes,
dans lequel le dispositif de stockage d'hydrogène (10) est rechargeable en hydrogène et/ou recyclable.

13. Procédé (100) pour libérer de l'hydrogène d'un dispositif de stockage d'hydrogène (10) selon l'une quelconque des revendications précédentes, comprenant les étapes suivantes :
- connecter (102) le dispositif de stockage d'hydrogène (10) à une source d'énergie ;
- appliquer (104) de l'énergie au dispositif de stockage d'hydrogène (10) au moyen de la source d'énergie ;
- libérer (106) l'hydrogène du dispositif de stockage d'hydrogène (10) par l'intermédiaire de l'interface de libération d'hydrogène (16),
où la source d'énergie est de préférence une source d'électricité et/ou une source de micro-ondes.

14. Un dispositif de production d'énergie (50) comprenant le dispositif de stockage d'hydrogène (10) selon l'une des revendications 1 à 12 et une pile à combustible.

15. Aéronef (1) comprenant le dispositif de stockage d'hydrogène (10) selon l'une quelconque des revendications 1 à 12 ou le dispositif de production d'énergie (50) selon la revendication 14.
